# EUROPEAN PATENT SPECIFICATION

(11) **EP 0 975 137 B1**
(45) Date of publication and mention of the grant of the patent: **12.04.2006**
(21) Application number: 99305679.5
(22) Date of filing: 16.07.1999
(51) Int. Cl.: H04M 19/08

(54) **Network control apparatus capable of decreasing power consumption during a waiting mode**
Netzwerksteueranordnung mit reduziertem Leistungsverbrauch im Wartemode
Dispositif de commande de réseau pour réduire la consommation d'énergie pendant une condition d'attente

(30) Priority: 21.07.1998 JP 22107298
(43) Date of publication of application: 26.01.2000
(73) Proprietor: Ricoh Company, Ltd., Tokyo 143-8555 (JP)
(72) Inventor: Okabe, Shouji, Atsugi-shi, Kanagawa-ken (JP)
(74) Representative: Senior, Alan Murray

(56) References cited:
- PATENT ABSTRACTS OF JAPAN vol. 012, no. 281 (E-641), 2 August 1988 (1988-08-02) & JP 63 059092 A (MATSUSHITA ELECTRIC IND CO LTD), 14 March 1988 (1988-03-14)
- PATENT ABSTRACTS OF JAPAN vol. 011, no. 209 (E-521), 7 July 1987 (1987-07-07) & JP 62 031240 A (NEC CORP), 10 February 1987 (1987-02-10)

## Description

The present invention relates to a network control apparatus, and more particularly to a network control apparatus which is capable of decreasing a power consumption during a call signal waiting mode.

Many network control apparatuses have a current sensor for detecting a line current and a line current detector for detecting an output signal from the current sensor so that a call signal from other communications terminal can be detected during a call signal waiting mode. For this, the current sensor and the line current detector need a power during the call signal waiting mode. Accordingly, the network control apparatus consumes the power all the time.

One solution is described in Japanese Laid-Open Patent Publication No. 08-262072 (1996), which uses a current sensor having a hole device to detect a line current and improves a power consumption of the current sensor.

The above solution is not sufficient, however, and a source power voltage itself to be supplied during the call signal waiting mode may be saved.

JP-A-62-031240 discloses a circuit for turning off electric power to a device on completion of signal processing.

Accordingly, an object of the present invention is to provide a novel network control apparatus which is capable of decreasing a power consumption during a call signal waiting mode.

To achieve this and other objects, the present invention provides a novel network control apparatus which includes a current sensor, a line current detector, and a source power voltage controller. The current sensor detects a line current flowing a line. The line current detector detects an output signal from the current sensor. The source power voltage controller turns on and off a source power voltage to be supplied to the current sensor.

The source power voltage controller may turn on the source power voltage during a first time period when the current sensor operates and a second time period when the line current detector detects the output signal from the current sensor, and turn off during other time periods.

The line current detector may detect the output signal from the current sensor immediately after the first time period.

The source power voltage controller may determine whether the line current detector detects the line current, and keep the source power voltage at a high level when determining that the line current detector detects the line current.

Other aims, features, and advantages of the present invention will become apparent from the following detailed description when read in conjunction with the accompanying drawings.

A more complete appreciation of the present invention and many of the attendant advantages thereof will be readily obtained as the same becomes better understood by reference to the following detailed description when considered in connection with the accompanying drawings, wherein:
Fig. 1 is a schematic block diagram of a main circuit of a network controller according to an embodiment of the present invention;
Fig. 2 is a time chart for explaining signal statuses during on-hook and off-hook modes of the network controller of Fig. 1; and
Fig. 3 is a flowchart for explaining an exemplary procedure of a line loop current check operation of the network controller of Fig. 1.

In describing preferred embodiments of the present invention illustrated in the drawings, specific terminology is employed for the sake of clarity. However, the present invention is not intended to be limited to the specific terminology so selected and it is to be understood that each specific element includes all technical equivalents which operate in a similar manner.

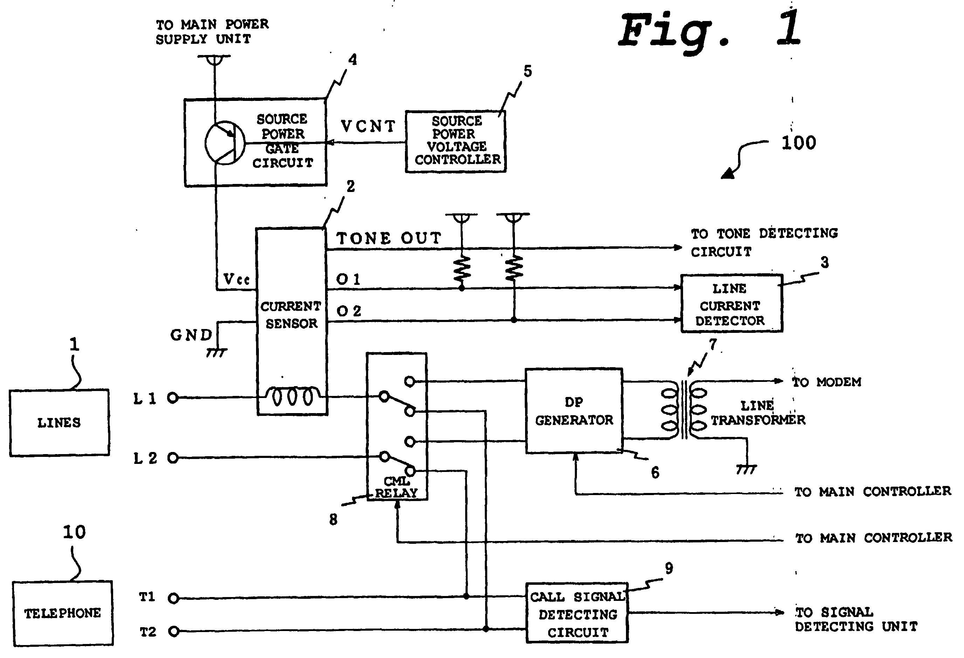

Referring now to the drawings, wherein like reference numerals designate identical or corresponding parts throughout the several views, and more particularly to Figure 1 thereof, there is illustrated a schematic block diagram of a main part of a network controller 100 according to an embodiment of the present invention. The network controller 100 of Fig. 1 includes terminals L1 and L2 for connecting internal circuit lines to lines 1 connected to a telephone line (e.g., an analog telephone line network). The network controller 100 further includes a current sensor 2, a line current detector 3, a source power gate circuit 4, a source power voltage controller 5, a DP (dial pulse) generator 6, a line transformer 7, a CML relay 8, a call signal detecting circuit 9, and terminals T1 and T2. The terminals T1 and T2 are connected to a telephone 10.

The current sensor 2 is connected to the line from the terminal L1 and detects a line loop current over a predefined level flowing through the line. A line loop current will be generated when a call session starts between two communications apparatuses; the apparatus having the network controller 100 and another communications terminal. When the current sensor 2 detects such a line loop current during a time of a call session, it generates binary signals O1 and O2, and extracts a tone signal which is overlaid on the line loop current flowing through the line. The binary signals O1 and O2 are independent from the line polarity, and are detected by the line current detector 3 connected to the current sensor 2. Also, the current sensor 2 generates a signal TONE OUT which is sent to a tone detecting circuit (not shown).

The source power gate circuit 4 is connected to a main power supply unit (not shown) and the current sensor 2. The source power gate circuit 4 includes a PNP transistor to control a source power voltage supplied from the main power supply unit (not shown) and turns on and off a supply power voltage V_{cc} to the current sensor 2.

The source power voltage controller 5 controls the source power gate circuit 4 with a control signal VCNT output therefrom. The source power voltage controller 5 outputs the VCNT at a low level to turn on and at a high level to turn off the supply power voltage V_{cc} to the current sensor 2.

The DP generator 6 generates a dial pulse and is controlled by a main controller (not shown).

The line transformer 7 is connected to the DP generator 6 to adjust a circuit impedance and to disconnect the primary and secondary sides of the circuit. The line transformer 7 receives and transmits message signals and the like exchanged between the two communications apparatuses during a call session.

The CML relay 8 connects the lines from the terminals L1 and L2 to the line from the terminals T1 and T2, as shown in Fig. 1, during a time period of waiting a call signal which is referred to as a call waiting period. When a call session starts, the CML relay 8 switches the connection of the lines from the terminals L1 and L2 to the DP generator 6 by the main controller (not shown).

The call signal detecting circuit 9 is connected to the telephone 10 via the lines from the terminals T1 and T2, and detects a call signal sent to the telephone 10. When the call signal detecting circuit 9 detects a call signal, it generates a binary signal and sends it to a signal detecting unit (not shown).

In the thus configured circuit of the network controller 100, a line loop current over the predefined level flows when a handset (not shown) of the telephone 10 is off-hooked and, then, the current sensor 2 detects the line loop current. However, during the call waiting period, the power voltage supplied to the current sensor 2 is controlled to be turned on and off by the source power voltage controller 5 using the power gate circuit 4.

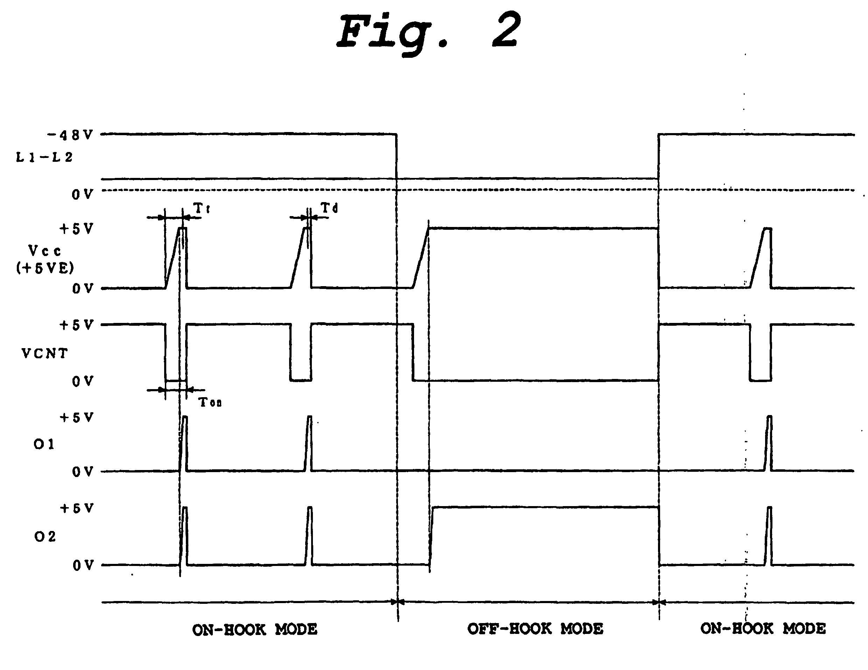

Referring to Fig. 2, an operation of the network controller 100 is explained. Fig.2 shows statuses of signals of the network controller 100 during a time period when the telephone 10 changes its mode from an on-hook mode to an off-hook mode and then from the off-hook mode to another on-hook mode. Here, the on-hook mode represents the call waiting mode and the off-hook mode represents the call session mode.

During the first on-hook mode in the time chart of Fig. 2, the lines L1 and L2 are connected and drop down to -48 volts, and the line current detector 3 performs a periodic line loop current check for checking generation of a line loop current on the line of the terminal L1 at intervals of a predetermined time period. In this case, the source power voltage controller 5 drops the VCNT signal to the low level for a time period Tₒₙ so as to provide the supply power voltage V_{cc} (e.g., +5 volts) to the current sensor 2. Here, a time period T_{d} for detecting the line loop current is provided immediately after a time period Tᵣ in which the current sensor 2 is activated.

During the on-hook mode, the current sensor 2 outputs the binary signals O1 and O2 as high signals. Accordingly, these signals are high in the time periods T_{d} during the on-hook mode.

immediately after the binary signals O1 and O2 are detected, the source power voltage controller 5 raises the VCNT signal to the high level so as to stop supplying the supply power voltage V_{cc} to the current sensor 2. When V_{cc} is turned off, the binary signals O1 and O2 from the current sensor 2 become low.

The present embodiment will repeat the above operation at every time period Tₒₙ during the on-hook mode, and causes the supply power voltage V_{cc} to form a triangle pulse, as illustrated in Fig. 2, so that an average power consumption will be decreased.

When the handset (not shown) of the telephone 10 is off-hooked, or at a call transmission mode, the CML relay 8 is controlled to change the connection of the lines from L1 and L2 to the lines to the DP generator 6, so that the circuit turns into the off-hook mode. At a call receiving mode, the call signal detecting circuit 9 detects a call signal flowing through the line and, then, the CML relay 8 is caused to change the connection of the lines from L1 and L2 to the lines to the DP generator 6, so that the circuit turns into the off-hook mode.

During the off-hook mode, the lines of the terminals L1 and L2 have a few volts, as illustrated in Fig. 2, such that the line loop current over the predetermined level flows into the current sensor 2. In this case, when the line current detector 3 performs the periodic line loop current check, one of the binary signals O1 and O2 output from the current sensor 2 becomes low. Which signal of the O1 and O2 becomes low is determined by the signal polarity of the lines of L1 and L2.

Assuming that the binary signal O1 becomes low, for example, the line current detector 3 detects no binary signal O1 and determines that the circuit is in the off-hook mode. Then, the source power voltage controller 5 maintains the VCNT signal at the low level so as to keep providing the supply power voltage V_{cc} to the current sensor 2. This is because the current sensor 2 needs the supply power voltage to detect the tone signal TONE OUT, a reversed signal polarity operated using the line loop current, a dial pulse for a remote switching from the telephone 10, and so forth during the off-hook mode. If the current sensor 2 is not supplied with the supply power voltage, it cannot perform these detection operations during the off-hook mode.

When the handset (not shown) is put back to the telephone 10, the mode is turned back to the on-hook mode and the lines of the terminals L1 and L2 are disconnected. In this case, the above-described operations in the on-hook mode will be performed, as shown in Fig. 2.

In this way, the network controller 100 performs the line loop current check operation and the on/off control operation of the supply power voltage V_{cc} to the current sensor 2.

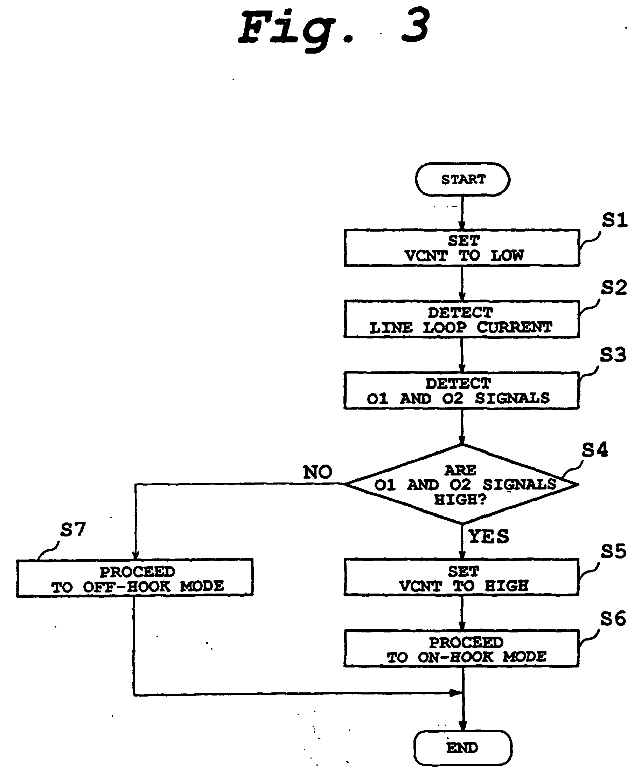

Next, a main procedure of the line loop current check operation of the network controller 100 is explained with reference to Fig. 3. In Step S1 of Fig. 3, the source power voltage controller 5 sets the control signal VCNT to the low level and turns on the supply power voltage V_{cc} which is supplied to the current sensor 2. In Step S2, the current sensor 2 operates and the time period Tᵣ passes. In Step S3, the line current detector 3 detects the binary signals O1 and O2 output from the current sensor 2.

In Step S4, the line current detector 3 determines if the binary signals O1 and O2 are at the high level. If both O1 and O2 are at the high level and the determination result of Step S4 is YES, the process proceeds to Step S5. In Step S5, the source power voltage controller 5 raises the power control signal VCNT to the high level, and turns off the supply power voltage V_{cc}. Then, in Step S6, the process proceeds to a procedure of the on-hook mode operation. In this case, the supply power voltage V_{cc} is turned on and off, and the power consumption by the current sensor 2 is accordingly decreased.

If at least one of the signals O1 and O2 is at the low level and the determination result of Step S4 is NO, the process proceeds to Step S7. In Step S7, the process proceeds to a procedure of the off-hook mode operation. In this case, the supply power voltage V_{cc} is maintained at the high level.

The network controller 100 can watch generation of the line loop current by performing the above-described procedure at intervals of a predetermined time period so as to save the power consumption.

The present invention may also be applied to a variety of communications apparatuses which includes a signal detecting circuit constantly consuming the power during the waiting mode.

Obviously, numerous additional modifications and variations of the present invention are possible in light of the above teachings. It is therefore to be understood that within the scope of the appended claims, the present invention may be practiced otherwise than as specifically described herein.

## Claims

1. A network controller, comprising:
a current sensor (2) for detecting a line current flowing in a line; and
a line current detector (3) for detecting an output signal from said current sensor;
**characterised by**:
a source power voltage controller (5) for turning on and off a source power voltage (Vcc) to be supplied to said current sensor.

2. A network controller according to claim 1, wherein said source power voltage controller (5) is adapted to turn on said source power voltage (Vcc) during a first time period when said current sensor operates and during a second time period when said line current detector detects said output signal from said current sensor, and to turn it off during other time periods.

3. A network controller according to claim 1, wherein said line current detector (3) is adapted to detect said output signal from said current sensor immediately after said first time period.

4. A network controller according to claim 1, wherein said source power voltage controller (5) is adapted to determine whether said line current detector (3) detects said line current, and to keep said source power voltage (Vcc) at a high level when determining that said line current detector detects said line current.

## Revendications

1. Contrôleur de réseau, comprenant :
un capteur de courant (2) pour détecter un courant de ligne qui circule dans une ligne ; et
un détecteur de courant de ligne (3) pour détecter un signal de sortie en provenance dudit capteur de courant,
**caractérisé par** :
un contrôleur de tension de puissance de source (5) pour activer et désactiver une tension de puissance de source (Vcc) destinée à être appliquée sur ledit capteur de courant.

2. Contrôleur de réseau selon la revendication 1, dans lequel ledit contrôleur de tension de puissance de source (5) est adapté pour activer ladite tension de puissance de source (Vcc) pendant une première période temporelle lorsque ledit capteur de courant fonctionne et pendant une seconde période temporelle lorsque ledit détecteur de courant de ligne détecte ledit signal de sortie en provenance dudit capteur de courant, et pour la désactiver pendant d'autres périodes temporelles.

3. Contrôleur de réseau selon la revendication 1, dans lequel ledit détecteur de courant de ligne (3) est adapté pour détecter ledit signal de sortie en provenance dudit capteur de courant immédiatement après ladite première période temporelle.

4. Contrôleur de réseau selon la revendication 1, dans lequel ledit contrôleur de tension de puissance de source (5) est adapté pour déterminer si oui ou non ledit détecteur de courant de ligne (3) détecte ledit courant de ligne, et pour maintenir ladite tension de puissance de source (Vcc) à un niveau haut lors de la détermination du fait que ledit détecteur de courant de ligne détecte ledit courant de ligne.

## Patentansprüche

1. Netz-Controller, der umfasst:
einen Stromsensor (2), um einen in einer Leitung fließenden Leitungsstrom zu detektieren; und
einen Leitungsstrom-Detektor (3), um ein Ausgangssignal von dem Stromsensor zu detektieren;
**gekennzeichnet durch**:
einen Leistungsquellenspannungs-Controller (5), um eine Leistungsquellenspannung (Vcc), die an den Stromsensor angelegt werden soll, an- und abzuschalten.

2. Netz-Controller nach Anspruch 1, bei der der Leistungsquellenspannungs-Controller (5) so beschaffen ist, dass er die Leistungsquellenspannung (Vcc) während einer ersten Zeitdauer, in der der Stromsensor arbeitet, und während einer zweiten Zeitdauer, in der der Leitungsstromdetektor das Ausgangssignal von dem Stromsensor detektiert, anschaltet und zu allen anderen Zeiten abschaltet.

3. Netz-Controller nach Anspruch 1, bei dem der Leitungsstromdetektor (3) das Ausgangssignal von dem Stromsensor unmittelbar nach der ersten Zeitdauer detektieren kann.

4. Netz-Controller nach Anspruch 1, bei der der Leistungsquellenspannungs-Controller (5) feststellen kann, ob der Leitungsstromdetektor (3) den Leitungsstrom detektiert, und die Leistungsquellenspannung (Vcc) auf einem hohen Pegel halten kann, wenn er feststellt, dass der Leitungsstromdetektor den Leitungsstrom detektiert.
